# EUROPEAN PATENT APPLICATION

(11) **EP 2 189 736 A2**
(43) Date of publication of application: **26.05.2010**
(21) Application number: 08805316.0
(22) Date of filing: 09.07.2008
(51) Int. Cl.: F24J 2/14

(54) **SOLAR ENERGY CONCENTRATOR AND ASSEMBLY METHOD**

(30) Priority: 10.07.2007 ES 200701933; 30.06.2008 ES 200801950
(71) Applicant: Alejo Trevijano, Jose Javier, 41003 Sevilla (ES)
(72) Inventor: Alejo Trevijano, Jose Javier, 41003 Sevilla (ES)
(74) Representative: Ungria Lopez, Javier
(86) International application number: PCT/ES2008/000486
(87) International publication number: WO 2009/007485

(57) **Abstract**

It includes at least one module with a concave reflecting mirror surface which concentrates the light radiation towards certain devices in order to then obtain electrical or other type of energy. It also includes means for orienting that mirror surface according to the position of the sun.

It is **characterised in** principle in that each module comprises a thin lightweight laminar body with an arched structure which incorporates the concave mirror surface, this laminar body being associated with certain stiffening supports which stabilise and stiffen that arched structure in order to maintain this shape, said structure being supported on some ground with the interposition of guide means by which the arched structure at least tilts towards one side or the other depending on the light sensor or timer which activates a device that positions each module in real time with the required orientation according to the position of the sun.

## Description

As stated in the title of this descriptive specification, the present invention relates to a solar energy concentrator and mounting process.

The solar energy concentrator is intended to concentrate light radiation from the sun with the aim of obtaining electrical energy or energy in the form of heat for heating fluids such as water. It is also intended to achieve other energy resources such as hydrogen and oxygen by means of a photolysis process or for use with systems which need light or heat from the sun for their generation and/or also for purification or desalination of water.

The concentrator in general comprises high efficiency modules possessing a light and simple structure, requiring a low cost for their installation, furthermore requiring a low cost per each specific module.

Moreover, the mounting process is substantially simple and rapid, being able to be carried out directly on the ground or with the interposition of some guides which permit both the mounting of the modules and a characteristic mobility, all this depending on the orientation and position of the sun.

Evidently, the orientation of the modules is automatic so that they can be located in real time with the most suitable position with respect to the position of the sun and thereby achieve the maximum light radiation and therefore a high utilisation of the solar energy.

Other characteristics of the invention are intended to achieve a better functioning of the solar concentrator with greater stability, above all in the presence of hurricane force winds and also winds of lesser intensity, incorporating different characteristic anti-wind systems.

Other improvements of the invention are the following:
- Means for avoiding the catenary of the cables for guiding the different modules.
- Means for synchronising the position of the balancing pipes for the modules.
- Automatic means of cleaning the reflecting surface of the different modules.
- Means for heating water to high temperatures.
- Means for desalinating water and also for decontamination of dirty water.
- System for achieving high voltage without the use of costly conventional transformers.

### BACKGROUND OF THE INVENTION

There currently exist different systems for energy generation by solar concentration, such as for example a system of multiple motorized mirrors which concentrate the heat in a high point or tower for heating up a fluid and generating steam for driving a turbine, parabolic Stirling concentrators, solar wind chimneys, parabolic cylindrical mirror concentrators, but they are all expensive with complex structures and require several years for installation in an average size solar plant. To this must be added the fact that electricity generation starting from photovoltaic cells is based on the property of the semiconductor materials they contain to generate electrons when light impinges on their surface. The photons of light cause the electrons to leave their orbit thereby creating a potential difference and an electric current when poles of different voltage are joined together. These photovoltaic cells are located in series or in parallel depending on whether it is sought to obtain more voltage or more current.

The voltage produced by the cells is direct and so, in order to obtain alternating current, an electronic circuit will be applied that will convert the direct current into alternating current. The level of voltage or electric current is also determined by the amount of light incident on the cell, such that the more light there is the greater the current of electrons and therefore the greater the electrical energy.

Moreover, research is underway into cells made of materials other than semiconductors, whose voltage level will remain constant independently of the amount of incident light. This implies a great advance since on days that are cloudy or with lower light levels, the voltage level will remain constant.

Another parameter influencing the level of electrical power generated by the cells is the spectrum or colour of the incident light. The power response of the cells is different at different spectra or colours. Depending on the material or the structure, the cells behave differently towards different ranges of colours, such that the ideal cell would be one, which had an equal and linear response towards the entire spectrum of light, from Infrared up to ultraviolet.

Nevertheless, in practice this is difficult to achieve and from a beam of white light, which contains the entire range of colours, a cell only utilises a portion corresponding to the frequency of light to which the cell is most sensitive.

What is currently done in order to achieve a higher efficiency is to locate fine photovoltaic laminas with different responses to the light spectrum and which together cover the entire range, being stuck one on top of another in order to achieve a higher efficiency. The drawback of this method is that the laminas themselves partially block off the passage of light.

On the other hand, experiments have been performed on decomposing the light using a holographic filter in order to cause light of different colours to impinge on the corresponding cell optimised for that colour.

The drawback of this technique is that the focal distance or point between the filter and the point of incidence of the light is very large, and a lot of space and volume is needed for mounting a module composed of a holographic filter and solar cells. These filters also generate two beams starting from the light that passes through them: the main beam which continues to be white light and the secondary beam composed of the range of colours of the light spectrum. This secondary beam is utilised but the main beam is not.

Another technique for decomposing the light into colours is one already known In optics and is based on the use of one or several prisms.

Regarding this technique, it is known that NASA has performed tests creating a vault consisting of small prisms which decompose the light into colours and which impinges on small solar cells optimised for the different wavelengths and aligned vertically beneath the vault.

This design requires a lot of space and volume and, besides, the prisms do not decompose 100% of the light reflected off their faces, which leads to losses of efficiency. Moreover, the prisms need high levels of light for decomposing it into colours, and so on a cloudy day or one with low light levels, the prism or prisms behave as if they were an opaque surface and therefore practically no energy would be obtained.

Furthermore, a photovoltaic solar plant is composed of solar cells and mechanisms, which help to direct the plaques towards the sun, following the same path as that made by the sun during the course of the day.

In order to achieve this, sensors and circuits are fundamentally used which determine the position of the sun and the plaques are moved by means of motors or servomotors in order to direct them towards the desired point.

The motors require strong, expensive and heavy structures, and they are also complex to install, which has a decisive effect on the construction times for the installation of a photovoltaic solar plant consisting of thousands of modules.

Other known systems that are being used in creating solar plants involve the use of solar concentrators using mirrors or Fresnel lenses, which are less costly than photovoltaic cells, in order to successfully focus the light from the sun on the respective cells or on different systems that generate or store energy starting from heat.

To summarise, therefore, it can be said that right now, known solar plants are expensive, complex, difficult to install and also difficult to construct. All this means that photovoltaic energy is not a feasible or real alternative, bearing in mind that they also depend on the weather conditions.

So, for a solar plant to be feasible and for photovoltaic or thermovoltaic energy to be a good alternative to consider in the field of electricity generation for domestic use, it has to be low cost and easy and quick to install, and at the same time it has to be able to be efficient in adverse weather conditions.

Moreover, current systems of solar concentration for obtaining energy resources are expensive, they have complex and heavy structures, and their installation takes several years in order to produce a medium or large size energy plant. The systems of motors that are used for pointing the solar concentrators towards the daily path of the sun are expensive and they break down very often.

### DESCRIPTION OF THE INVENTION

With the aim of achieving the objectives and avoiding the drawbacks mentioned in the previous sections, the invention proposes a solar energy concentrator that is defined starting from at least one module with a concave reflecting mirror surface which concentrates the light radiation towards certain receiver devices in order to then obtain electrical or other type of energy, furthermore including means for orienting that mirror surface according to the position of the sun

It is characterised In principle in that each module comprises a thin lightweight laminar body with an arched structure which incorporates the concave mirror surface, this laminar body being associated with certain stiffening supports which stabilise and stiffen that arched structure in order to maintain its shape, said structure being supported on some ground with the interposition of guide means by which the arched structure can tilt and be moved by rolling towards one side or the other depending on a light sensor or timer which activates a device that positions each module in real time with the required orientation according to the position of the sun.

Another possibility is that each module as a whole has purely rotational movement.

In one embodiment the device for positioning each module or array of modules in real time comprises two balancing side tanks which, depending on the relative variation among the weights of the material contained in those tanks, vary the orientation of the respective module, with the material passing from one tank to the other mechanically and/or electrically in order to balance and achieve each position of the module depending on the light sensor or timer, with the material being transferred from one to another tank and vice versa, in accordance with the position of the sun.

The side tanks can be hung in tilting fashion in the uppermost part of the sides of each module along their length.

Moreover, the material contained in those tanks can be a liquid fluid that is transferred by means of a closed circuit from one tank to the other via some lower zones with the aid of electrovalves and a pump associated with the light sensor or timer.

The tanks are preferably hollow sealed bodies with an essentially tubular structure provided with small upper holes in order to ensure the proper functioning of the system in the sense of preventing the formation of vacuum chambers which would hinder the transfer of liquid from one side tank to its pair, The connections for passing the liquid from one to another side tank will in turn be located in a lower zone of those tanks.

The device for positioning each module or array of modules in real time can comprise a linear motor element, such as a hydraulic or pneumatic cylinder, which acts on each module or array of modules in order to cause them to tilt towards one side of the other, the rod of the cylinder being connected in correspondence with the upper edges of the respective module or array of modules.

The device for positioning each module or array of modules in real time can also comprise at least one motor element, whose outlet rotation shaft includes a pulley to which is coupled a belt or similar coupled to another loose rotary element, the ends of these belts being connected with the upper edges of each module or array of modules.

Moreover, the guide means are located in the lower part of each module incorporating some guides which are complemented with other transverse guides on the ground or raised with respect to said ground, in order to ensure an ordered tilting of the modules during their tilting movement when rolling in search of the most suitable orientation according to the position of the sun. Such guides for the modules can be incorporated into the stiffening supports. The guides on the ground in turn consist of some ribs by way of rails while the guides for the module consist of a staggered structure.

In another embodiment, the guides on the ground consist of some ribs by way of rails while the guides for the module consist of a channelled structure.

In another embodiment, the guides on the ground consist of some channels while the guides for the respective module consist of some ribs.

It is also possible for the guides on the ground to consist of toothed racks which are complemented with teeth in the guides for the modules.

Another characteristic of the invention that we are concerned with is the incorporation of a trolley with wheels associated with the curved supports of the modules and also with the corresponding guides on the ground or guides that are raised with respect to that ground, thereby ensuring correct guiding as well as en effective anti-wind system. The said trolley furthermore incorporates some characteristic buffers that can prevent deformation of the module when the wind is very strong.

Another possibility is that the guides on the ground can comprise some steel cables or stays with sufficient tension for permitting and ensuring the guided mobility of the modules. These cables, secured by means of pairs of external supports, will be located above the ground, and in turn include some ringed runners which ensure connection between the guides for the modules and the steel cables.

Another characteristic of the invention is that the cables present a closed loop structure in order to prevent curvature of the cables, with the upper and lower branch of the cables being attached by means of some stiff pieces, thereby keeping the upper branch horizontal on which the corresponding modules are guided.

Moreover, the stiffening supports essentially consist of an enveloping structure clasping each module, at least via its ends, being able to follow the curvature of the outer face of the laminar bodies, and at the same time having a section which runs along the distance existing between the two longitudinal free edges of the curved laminar bodies.

When there exist at least two alignments of modules in parallel, provision has been made for the tanks on one side of the modules to be interconnected by means of a general duct provided in the forward face while the tanks on the other paired side will be interconnected by means of another duct provided in the rear face.

In this way, a perfect synchronisation is achieved in the movement of rolling and displacement towards one and the other side of the modules so that they can be oriented according to the position of the sun.

Another characteristic of the invention is that each general duct, which interconnects the balancing tanks, is linked to the ends of some rocker arms which are linked in their centres to some vertical posts, the free ends of those rocker arms being associated with a tensioning cable. In this way, a horizontal direction is assured for the two general ducts, preventing them from bending and thereby achieving correct synchronisation and optimum functioning of the solar modules.

The concentrator also includes means of fastening and stability for the modules which permit the tilting rolling movement of them, said means consisting of some pulleys fixed to the ground, each of which has a stay coupled to it, with the two arms of the stay being connected via their ends in the opposite sides of the stiffening supports.

Another characteristic of the invention relates to the possibility of the modules moving following the sun just with a rotary movement without any displacement by rolling. In this case, provision has been made for pairs of toothed pinions associated with other complementary teeth established in the stiffening supports of the modules.

As a novelty, provision has also been made for different means for counteracting the force of the wind, above all when it reaches high speeds.

All these means have In common certain holes or perforations through which the force of the wind can in all cases be dispelled starting from a certain wind speed, these holes being located in upper longitudinal zones of the laminar mirror bodies in proximity to the height of the balancing tanks.

Another characteristic refers to some centred reinforcements provided in the modules when they are of large dimensions in order to prevent their deformation, these reinforcements being joined by means of a transverse rod or cable.

Another novelty is the incorporation of some characteristic means of cleaning of the reflecting surface of the laminar bodies, these means being defined starting from a self-propelled vehicle with some large brushes which are responsible for cleaning the reflecting surface during the night when the solar concentrator is not functioning.

Moreover, described below are other characteristics of the invention aimed at obtaining a high efficiency for heating water or other fluids to high temperatures in combination with obtaining electrical energy and other energy resources such as hydrogen and oxygen by means of photolysis or electrolysis or for systems which need light or heat from the sun for their generation and/or also for purification or desalination of salt water from the sea.

In these cases, the necessary structures for achieving the objectives described in the previous paragraph will be located in a centred and longitudinal strategic zone, in the highest part of the modules for the concentrators. Said strategic zone will receive the projection of the heat and light emitted by the radiation from the sun via the corresponding laminar curved mirror bodies of the modules.

In that said strategic zone, water is made to circulate via some characteristic ducts, with a pitched roof being incorporated above them with a reflecting surface for conserving the heat and thereby optimising the incoming radiation.

So, in different embodiments, water is made to circulate in order to be heated to high temperatures by means of the heat component of solar radiation, simultaneously also using the light component of that solar radiation in order to obtain electrical or other kind of energy and also for obtaining hydrogen and oxygen by means of the process of photolysis or electrolysis with prior heating of the water to be electrolysed in order to require less electrical energy in the electrolysis process.

In another embodiment, the central and raised strategic zone of the modules is provided with two longitudinal collectors, upper and lower, for treating salt water or contaminated water, obtaining water that is clean and free of salt by evaporation, with the water to treat being made to circulate at least through the lower collector which will receive solar radiation via the laminar mirror bodies of the modules, raising the temperature of the water until evaporation of the water is achieved which will pass in the gaseous state as far as the upper collector via some narrow radial ducts linking both collectors, the water vapour then being condensed into the liquid state inside the upper collector, and the precipitated salt and/or other residues being extracted by means of an extraction and cleaning mechanism located in the lower collector.

It can also be pointed out that when the lower collector is emptied there exists the possibility of creating a vacuum in such a way that energy will also be able to be generated by means of a piston located in that lower collector.

The improvements of the invention also affect the mounting process as described below.

So, the mounting process concerns the mounting on some ground of an array of solar concentrators associated with each other which automatically move at all times searching for the orientation of the sun in an automatic manner, **characterised in that** it includes the following stages:
- a first stage in which two rollable tapes are laid out on the ground perpendicular to each other in the manner of two coordinate axes, these tapes being provided with laser devices at regular Intervals of distance which emit a series of laser beams in the form of a grid in a single horizontal plane.
- A second stage in which certain means for guiding, supporting and installation of the different modules are provided in accordance with the grid formed by the laser beams.
- A third stage in which two lateral vehicles transport laminar mirror bodies at the same time as pulling a central robot which transports all the other components of the different modules.
- A fourth stage in which the different support structures for the modules are mounted.
- A fifth stage in which some energy receivers are mounted.
- A sixth stage in which the reflecting laminar bodies are mounted by automatically screwing them on the support structure of the modules.
- A seventh stage in which the balancing pipes are positioned.
- An eighth stage in which the water and energy circuits are closed.

Provision has been made for the possibility of incorporating a Fresnel lens as a second option for projecting the solar radiation on the receptive energy receiver.

Another way of obtaining the electrical energy required in an embodiment of the invention has each module incorporating at least some collimator devices which collect the projection of the light radiation reflected by the reflecting mirror surface of the curved laminar body; furthermore incorporating some receiver diffractor devices for the light radiation concentrated in the collimator devices and some cells optimised to different light spectra which receive the light radiation according to the frequency of colours emitted by the diffractor devices.

The collimators can be located by inserting them in some windows of the arched laminar body of the mirror, interrupting the continuity of said laminar body, while the diffractors and the cells optimised to different light spectra are located behind that laminar body.

Each collimator, diffractor and cell optimised to different light spectra comprise an independent whole which is fixed to the laminar body or module by means of the collimator in correspondence with the respective window by means of flanges or similar.

The collimators can also be fixed via the top to an elongated support reaching to the ends of each module.

The collimators can present an arched structure, the concave mirror face of which projects the light radiation to the diffractors and these to the cells optimised to different light spectra, provision having been made for the possibility that the collimators can also present a plane structure which will project the light radiation to the diffractors.

The light reflecting face of the diffractors consists of a smooth mirror surface with small grooves that project the reflection of the light in the entire range of colours towards the cells optimised to different light spectra. This smooth mirror surface with small grooves is similar to that shown by a compact disc or other support having a similar surface with any other shape of perimeter.

In another simpler embodiment, though no less effective, provision has been made for the modules to incorporate at least one receiver photoelectric cell for the light radiation situated, for example, centrally above the respective module.

Another way of exploiting the energy of the concentrator is to incorporate pipes, coils or similar, through which water or other fluid is made to flow in order to raise its temperature with the heat generated by the light radiation emitted by each curved laminar body,

When the energy is obtained by means of collimators, diffractors and cells optimised to different light spectra, the process of mounting the solar energy concentrator consists of a first stage in which at least one plane laminar body is curved in a vehicle in order to obtain a curved structure, the concave face of which presents a reflecting mirror surface.

A second stage in which some stiffening supports are mounted on each curved laminar body in order to secure its curved structure.

A third stage in which independent units for light reception are mounted on the curved laminar structure.

A stage is included in which two longitudinal tanks are fitted in the side of the curved laminar bodies, the tanks containing a material which can be transferred from one tank to the other in order to vary the orientation according to the position of the sun with the aid of a light sensor.

Also included is a stage in which the curved structure that has been formed is offloaded onto the ground via the rear part of the vehicle.

In another intermediate stage some parallel guides are deposited on the ground which will be complemented with other guides of the curved laminar body.

In another stage the curved laminar bodies together with the rest of their elements linked to them are secured by means of some pulleys and stays, the ends of which are attached to the two opposites sides of the curved laminar bodies.

Moreover, it can be pointed out that the vehicle carries a continuous sheet in the form of a roll from which are obtained the different laminar bodies of curved structure forming the components of each module.

Each light receiver can comprise a photoelectric cell or independent arrays formed from a collimator, diffractor and cells optimised to different light spectra.

The light receivers could also consist of pipes or coils through which water or other fluid would flow in order to be heated with the solar radiation emitted by the curved laminar body.

The support surface for the concentrator of the invention will normally rest on the ground itself, though its application can evidently be carried out on any other surface without it necessarily having to be horizontal, nor having to be the ground itself, and it can be a raised surface, for example.

In order to achieve high voltage without the use of transformers, the cells are connected in series or they incorporate some electronic circuits. These are in turn fed by a master signal consisting of a sinusoidal alternating current equal in frequency and form to the type of current for electrical consumption in each country, 60 or 50 Hz, in order to obtain with the array of cells an alternating current signal equal to the master signal but of greater voltage or high voltage. The master signal can also consist of modulated pulses and the circuits then convert this signal of modulated pulses into a sine wave. The signal can in turn be single phase or multiphase.

Below, in order to facilitate a better understanding of this descriptive specification and forming an integral part thereof, some figures are attached in which the object of the invention has been represented by way of illustration and non-limiting.

### BRIEF DESCRIPTION OF THE DRAWINGS

**Figure 1****.**- Shows a perspective view of a solar energy concentrator, the inventive object.

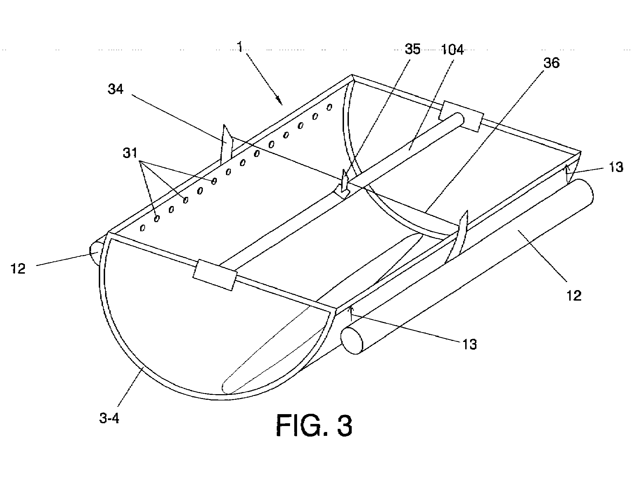

**Figures 2** **and** **3****.-** Show perspective views of other solar energy concentrators.

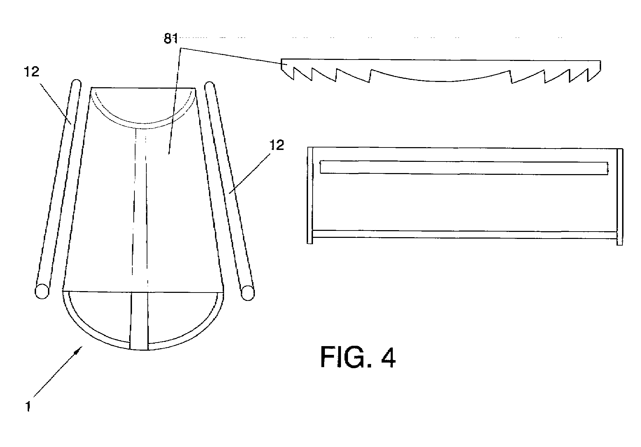

**Figure 4****.-** Shows a view of a solar energy concentrator with the incorporation of Fresnel lens.

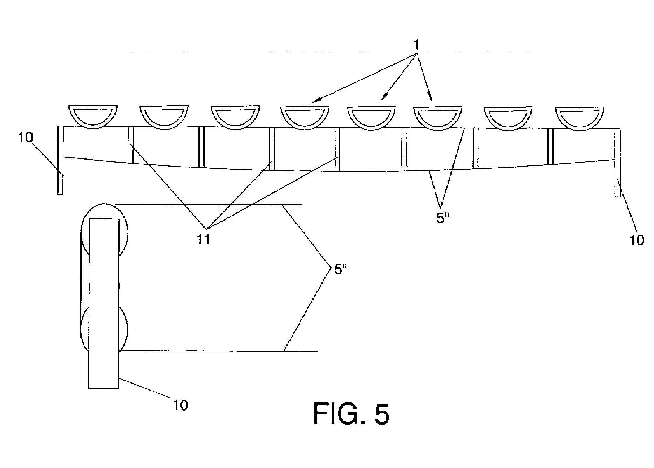

**Figure 5**.- Shows a view of a system of coupling several solar concentrators on the upper horizontal branch of a closed loop cable.

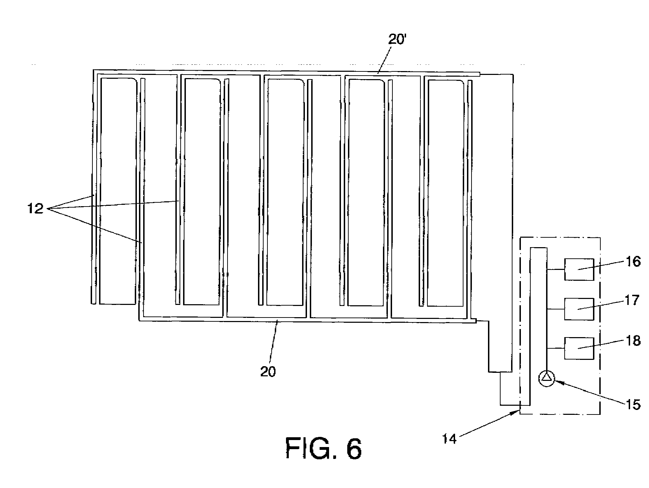

**Figure 6****.-** Shows a plan view of several solar concentrators with the incorporation of a hydraulic circuit in order to achieve movement of the cylinders.

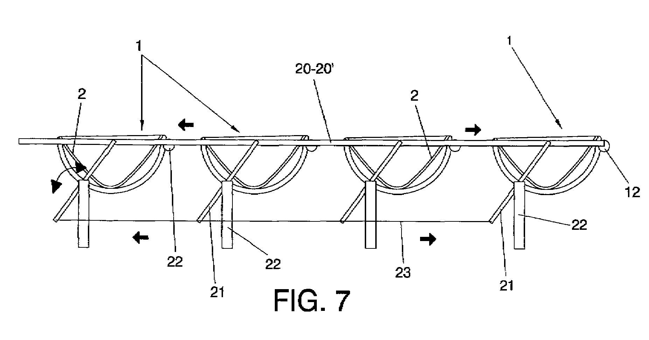

**Figure 7****.-** Essentially shows a synchronisation system for the movement of several solar concentrators.

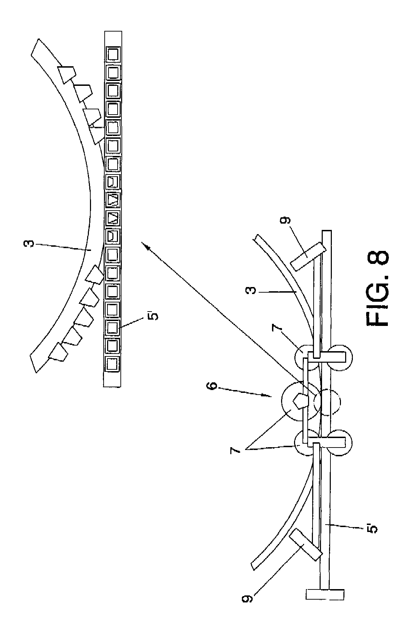

**Figure 8**.- Represents a view showing a system of guiding the concentrators.

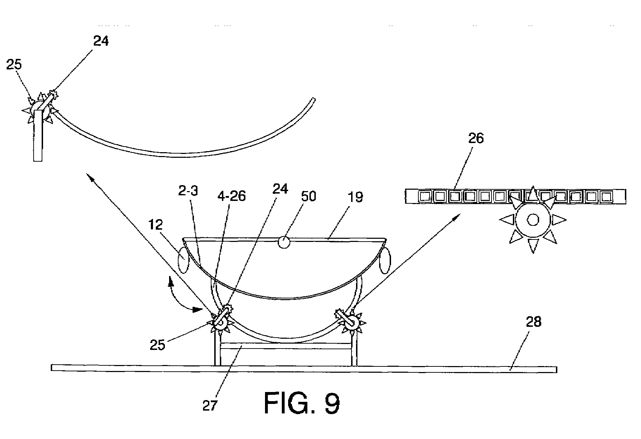

**Figure 9****.-** Shows a front view of a concentrator coupled on a guide and rest support integral with the ground.
**Figure 10****.-** Shows a concentrator with some means of cleaning thereof.
**Figures 11 to 14****.-** Show views of a concentrator with the incorporation of means for obtaining hot water, electrical energy and also hydrogen or oxygen by photolysis.
**Figure 15****.-** Shows a front view of a concentrator with the incorporation of a structure for obtaining drinking water by means of incorporation and condensation starting from salt water or contaminated water.
**Figures 16 to 18****.-** Show detailed views of the structure for obtaining drinking water.

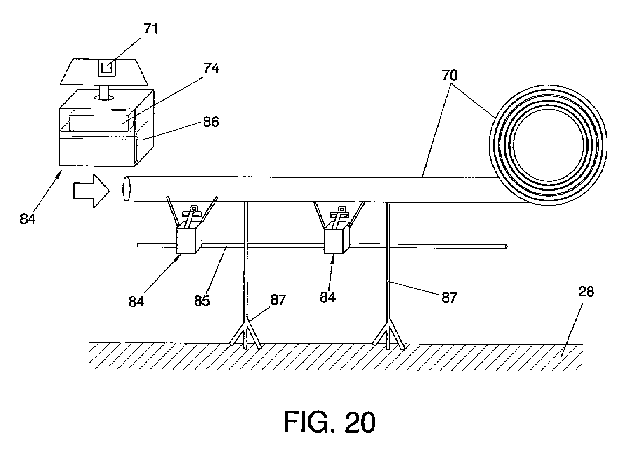

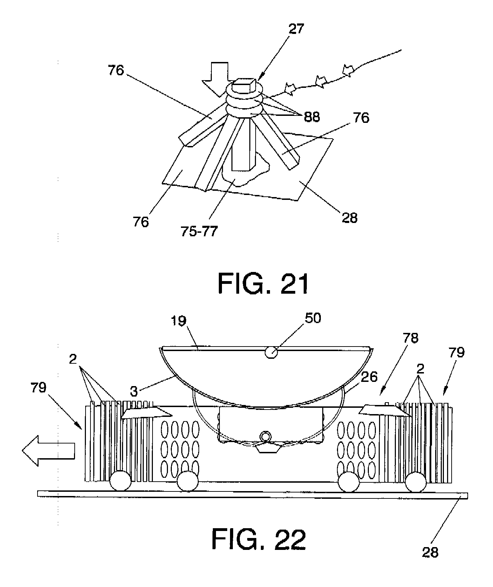

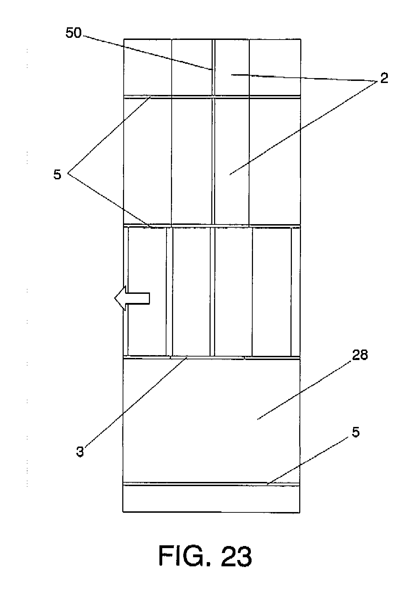

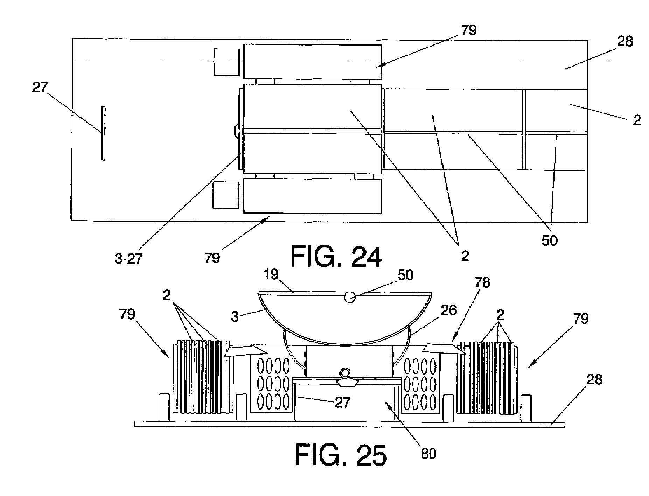

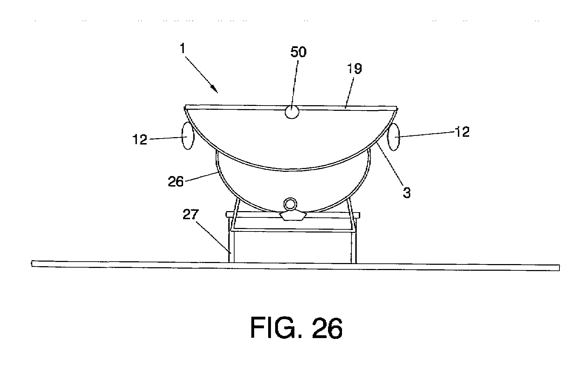

**Figures 19 to 26****.**- Show different views of the stages of the mounting process which also forms part of the inventive object that we are concerned with. In this process that described in figure 18 also has to be included.
**Figure 27****.-** Shows a plan view of an array of solar concentrators with solar energy receivers consisting of photovoltaic cells connected in series and associated with electronic circuits in order to directly achieve a high voltage in alternating current, thereby doing without large transformers.
**Figure 28****.-** Shows a detailed view of each of the electronic circuits cited in the previous figure.

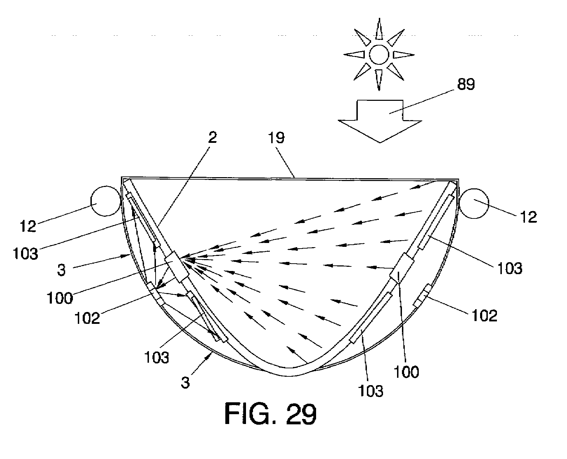

**Figure 29****.-** Shows a front view of a solar concentrator.

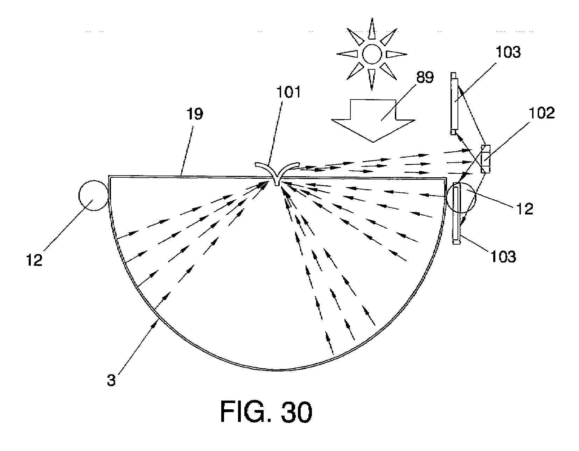

**Figure 30****.-** Shows another front view of another solar concentrator.

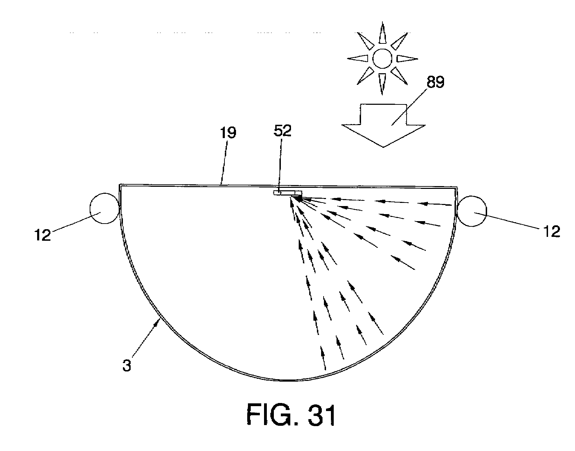

**Figure 31****.-** Shows a front view of a concentrator that includes a receiver photoelectric cell for the light radiation.

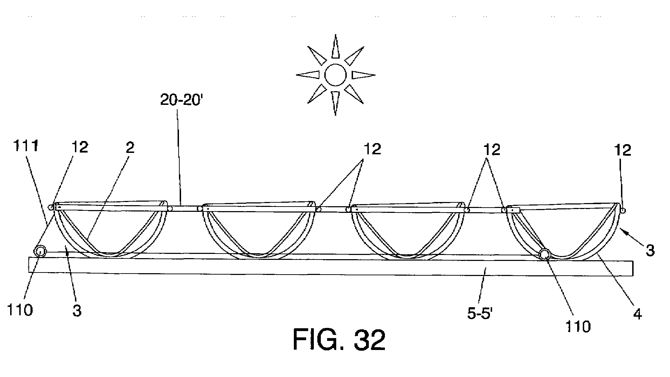

**Figure 32**.- Shows a front view of the concentrator consisting of several modules associated together which all move simultaneously according to the position of the sun at each moment.

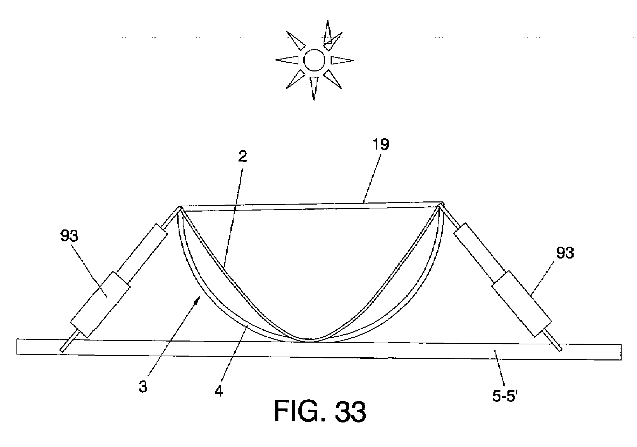

**Figure 33****.-** Represents a front view of the concentrator showing means for moving the concentrator defined by some linear elements such as cylinders.

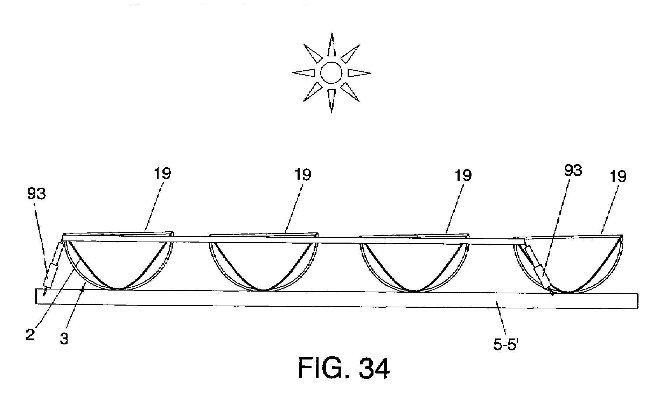

**Figure 34****.-** Shows a view similar to the above with the incorporation of linear elements for moving several modules simultaneously.

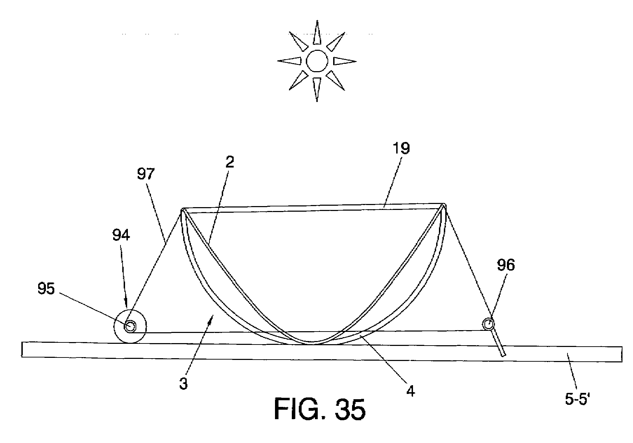

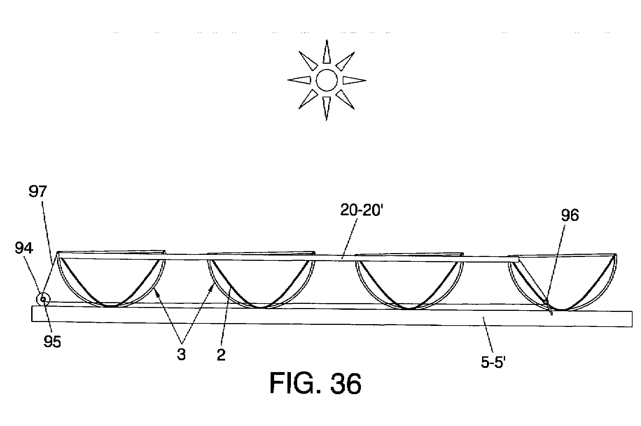

**Figures 35** **and** **36****.-** Show some simple and multiple concentrators standing out in which are other motor means for moving the different modules.

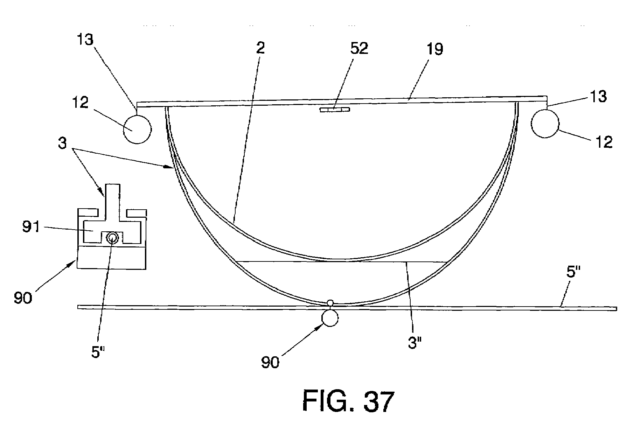

**Figure 37****.-** Shows another view of the concentrator in which the modules are guided on tensed cables raised up above the ground.

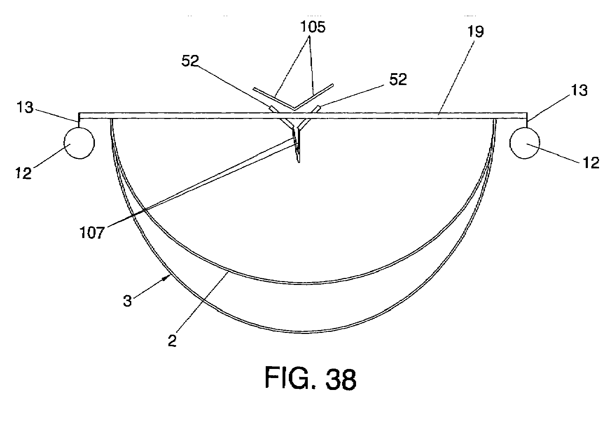

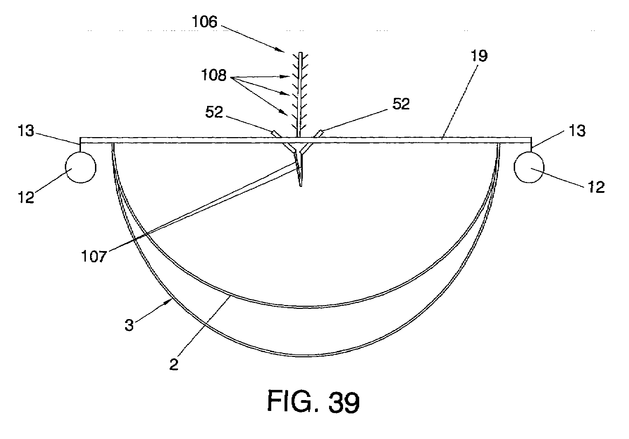

**Figures 38** **and** **39****.**- Show some front views of other concentrators defined by a single module.

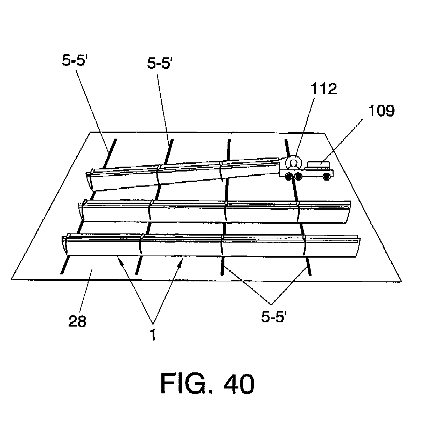

**Figure 40**.- Shows a schematic view of a mounting process of the inventive concentrator.

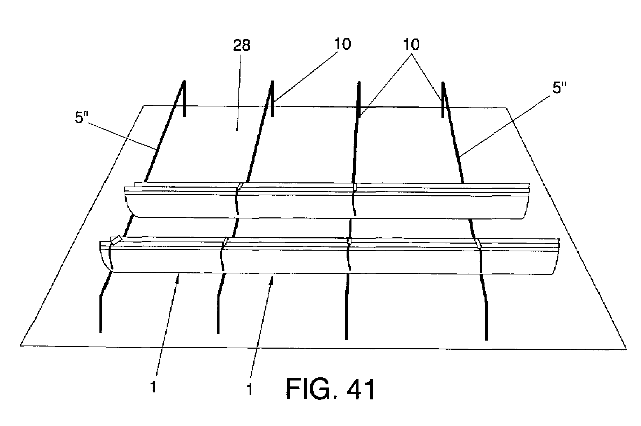

**Figure 41****.-** Shows a general view in plan of a concentrator mounted and guided on tensed cables.

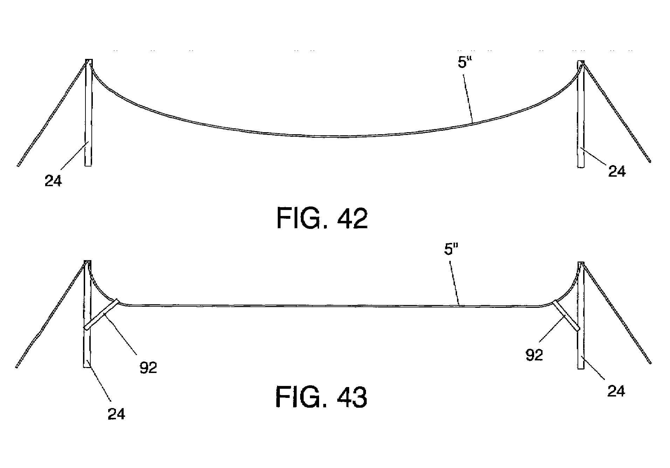

**Figures 42 and 43****.**- Show views of the guide cables for the modules standing out in which are the securing of them to some end posts or supports.

### DESCRIPTION OF THE PREFERRED FORM OF EMBODIMENT

Considering the numbering adopted in the figures, the solar concentrator consists of one or several modules 1, each of which includes at least one thin laminar body with an arched structure 2, whose concave face presents a reflecting mirror surface, in such a way that this laminar body 2 is in principle fixed to some curved supports 3 which, together with some longitudinal bars 3' and other transverse bars 3", stiffen the laminar body 2 in a stable fashion, maintaining its arched reflecting configuration which concentrates the solar radiation 89 in order to project it towards some devices in order to then obtain electrical energy or for heating a fluid, which will essentially be water, though it could be other fluids. Other energy resources can also be obtained such as hydrogen and oxygen by means of photolysis or it can be used for other systems which need light or heat from the sun for their generation and/or also for purification and/or desalination of water.

Each module 1 rests on the ground 28 with the interposition of some guide means via which the arched structure of the modules 1 rotates in an angular space towards one side or the other depending on a light sensor or times, not represented in the figures, which activates a device that positions each module 1 in real time with the required orientation according to the position of the sun.

So, the guide means are located in the lower part of each module 1 incorporating some guides 4 which are complemented with other transverse guides 5, 5', 5" on the ground 28 for ensuring an ordered tilting of the modules 1 during the tilting rolling movement in search of the most suitable orientation according to the position of the sun. These guides 4 for the modules 1 can be incorporated into the actual stiffening supports 3. The guides on the ground in turn consist of some ribs by way of rails 5 while the guides 4 for the module 1 consist of a staggered structure.

In another embodiment, the guides on the ground 28 consist of some ribs by way of rails 5 while the guides 4 of the respective module 1 consist of a channelled structure.

In another embodiment, the guides on the ground 28 consist of some channels while the guides of the respective module consist of some ribs.

It is also possible for the guides on the ground to consist of some toothed racks 5' while are complemented with other teeth of the guides 4 of the modules.

Provision has been made for the incorporation of a trolley 6 with wheels, upper 7 and lower 8, associated with the curved supports 3 of the modules 1 and also with the corresponding guides on the ground, thereby ensuring correct guiding as well as en effective anti-wind system. The characteristic trolley 6 also incorporates some side buffers 9 which can prevent deformation of the modules 1 when the wind is very strong, in which case the arched supports 3 make contact with those buffers 9.

Another possibility is that the guides on the ground 28 comprise some steel cables or stays 5" with sufficient tension for permitting and ensuring the guided mobility of the modules 1. These cables 5" can be located above the ground 28 and be secured by their ends in some supports 10.

In this case, the cables 5" preferably present a closed loop structure in order to prevent catenary curvature of the cables 5", with the upper and lower arms of the cables 5" being attached by means of some stiff pieces 11, thereby keeping the upper branch horizontal on which the corresponding modules are guided.

Another possibility is that the cables 5" are not closed loop, such that in this case the guiding is ensured by a ringed runner 90 which is displaced and guided along the cable 5" during the rolling and displacement movement of the modules 1 which at all times rest on those cables 5" by gravity. Said ringed runner 90 clasps the cable 5" and also a widened portion 91 of the stiffener supports 3. The runner 90 ensures the link between the modules 1 and the cable 5" in high winds and other adverse weather conditions outside of what is normal. In this case the possibility also exists of incorporating some short stay cables for tensioning 92.

On the other hand, in a first embodiment, for positioning each module 1 or array of modules 1 in real time, provision has been made for two side tanks 12 which, depending on the relative variation among the weights of the material contained in those tanks 12, vary the orientation of the respective module 1, with the material passing from one tank to the other mechanically and/or electrically in order to balance and achieve each position of the module 1 depending on the light sensor or timer, with the material being transferred from one to another tank and vice versa, in accordance with the position of the sun.

The side tanks 12 can be hung in tilting fashion in the uppermost part of the sides of each module 1 along their length by means of some short chains or stays 13, or similar.

The material contained in those tanks 1 can be a liquid fluid that is transferred by means of a closed circuit from one tank to the other via lower zones with the aid of hydraulic equipment 14 associated with the light sensor or timer, the latter elements not having been represented in the figures. This hydraulic equipment is conventional and, among other elements, incorporates a pump engine 15, electrovalves 16 and other necessary known elements such as an electronic circuit 17 and some sensors 18.

The side balancing tanks 12 are preferably hollow sealed bodies with an essentially tubular structure provided with small upper holes in order to ensure the proper functioning of the system in the sense of preventing the formation of vacuum chambers which would hinder the transfer of liquid from one side tank to its pair 12. The connections for passing the liquid from one to another side tank 12 will in turn be located in a lower zone of those tanks 12.

In another embodiment, the device for positioning each module or array of modules 1 in real time comprises at least one linear motor element, such as a hydraulic or pneumatic cylinder 93, which acts on each module or array of modules 1 in order to cause them to tilt towards one side of the other, the rod of the cylinder 93 being connected in correspondence with the upper edges of the respective module or array of modules 1.

In another embodiment, the device for positioning each module or array of modules in real time 1 comprises at least one rotary motor element 94, whose outlet rotation shaft connects to a pulley 95 to which is coupled a belt 97 or similar coupled to another loose rotary element 96, the ends of the belt 97 being connected with the upper edges of each module or array of modules.

Evidently, both the loose rotary element 96 and the rotary motor element 94 will be statically secured.

The stiffening supports 3 essentially consist of an enveloping structure which externally clasps each module 1, at least via its ends, and at the same time having a transverse section 19 which runs along the distance existing between the two longitudinal free edges of the curved laminar bodies 2.

When there exist at least two alignments of modules 1 in parallel, provision has been made for the side tanks 12 on one side of the modules 1 to be interconnected by means of a general duct 20 provided in the forward face while the tanks 12 on the other paired side will be interconnected by means of another similar duct 20' provided in the rear face. In this way, a perfect synchronisation is achieved in the movement of rolling and displacement towards one and the other side of the modules 1 so that they can be oriented according to the position of the sun.

Each one of these general ducts 20, 20', which interconnects the tilting tanks 12, Is linked to the ends of some rocker arms 21 which are linked in their centres to some vertical posts 22, the free ends of those rocker arms 21 being associated by means of a tensed cable 23. In this way, a horizontal direction is assured for the two general ducts 20, 20', preventing them from bending (catenary) and thereby achieving correct synchronisation and optimum functioning of the solar modules 1.

The modules include means of fastening and stability which permit the tilting rolling movement of them, said means consisting of some pulleys 98 fixed to the ground, each of which has a stay 99 coupled to it, with the two arms of the stay being connected via their ends in the opposite sides of the stiffening supports 3.

The solar modules 1 can follow the orientation of the sun just with a rotary movement without any displacement by rolling, though the mobility can also be achieved by means of a combination of rotation and displacement by rolling as mentioned earlier.

So, in the case that there just exists rotary movement of the modules, provision has been made for pairs of toothed pinions 24 and 25 associated with other complementary teeth established in the stiffening supports 3 of the modules 1. In this case, there exists the possibility of incorporating some second curved lower stiffening supports 26 which are attached to the first ones 3 and which guide the rotary travel of the modules 1, said new lower supports 26 being associated with some frames with the shape of an inverted "U" 27, via whose arms they are attached to the ground 28.

As a novelty, provision has also been made for different means for counteracting the force of the wind, above all when it reaches high speeds.

All of these means have in common certain holes or perforations 29, 30 and 31 through which the force of the wind can in all cases be dispelled starting from a certain wind speed, these holes being located in upper longitudinal zones of the laminar mirror bodies 2 in proximity to the side tanks 12.

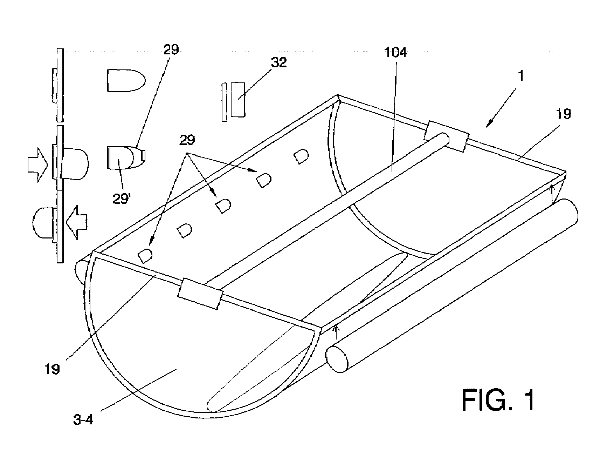

A first embodiment shown in figure 1 presents some magnetised pieces 32 complemented with a folding portion 29' which forms part of the laminar mirror body 2 and which, in the normal position, blocks the corresponding hole 29 for the passage of air, while in windy conditions the said folding portion 29' will close the passage of air 29 thanks to the magnetised piece 32. So, in windy conditions, the pressure of the wind on the array of modules 1 will be considerably reduced thanks to the freeing of the air passages.

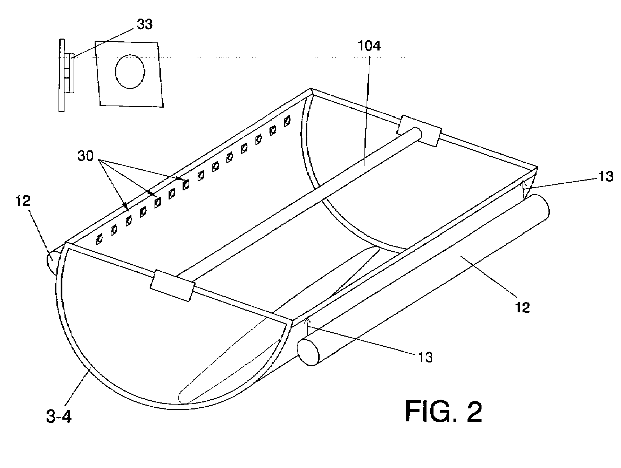

In a second embodiment shown in figure 2, provision has been made for some air passages 30 associated with some pieces 33 with their front face covered with mirror material in order not to lose any reflecting surface.

In a third embodiment, provision has been made for a succession of holes 31 made directly in the laminar mirror bodies 2.

When the modules 1 are of large dimensions, provision has been made for the incorporation of some lateral reinforcements 34 and a central one 35, all of them joined by means of a stay 36. The central reinforcement 35 is optional and is provided on a possible central collimator or other structure located in that zone for the reception of solar radiation.

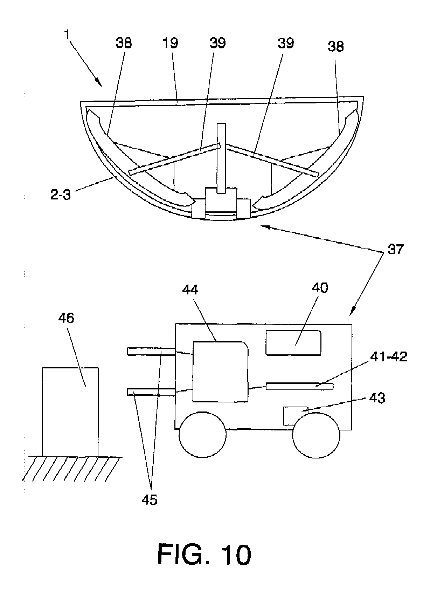

As shown in figure 10, provision has been made for a cleaning system defined on the basis of a self-propelled vehicle 37 which runs along each module 1 via its lowest part, said vehicle 37 incorporating two large cleaning brushes 38 which lead to some pipes 39 supplying fluid with the appropriate cleaning products, the fluid being housed in a tank 40 of the vehicle 37. It includes a control circuit 41 and sensors 42, motor 43 and rechargeable battery 44 by means of a plug 45 which will be connected to a power supply source 46 while the vehicle 37 is not in operation. The cleaning process will be carried out at night when there is no energy generation, as is evident.

The invention is also aimed at obtaining a high efficiency for heating water or other fluids to high temperatures in combination with obtaining electrical energy and other energy resources such as obtaining hydrogen and oxygen by means of photolysis or for use with systems which need light or heat from the sun for their generation and/or also for purification or desalination of salt water from the sea.

In these cases, the necessary structures for achieving the objectives described in the previous paragraph will be located in a centred and longitudinal strategic zone, in the highest part of the modules 1 for the concentrators. Said strategic zone will receive the projection of heat and light emitted by the radiation of the sun via the curved laminar mirror bodies 2 of the modules 1.

In said strategic zone, water Is made to circulate via some characteristic ducts, with a stainless steel pitched roof 47 being incorporated above them in order to conserve the heat and thereby optimise the incoming radiation.

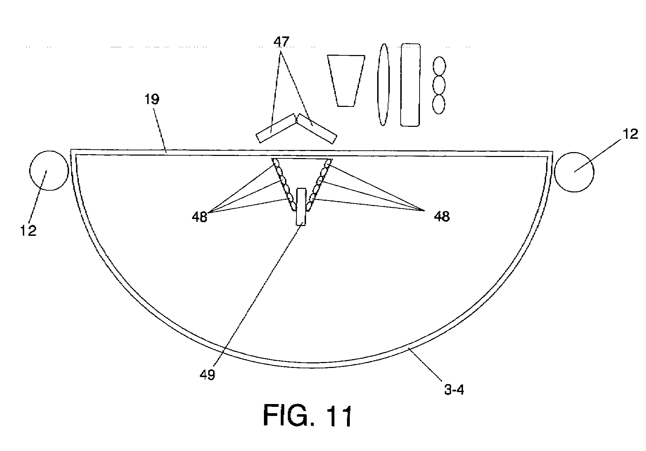

In a first embodiment shown in figure 11, a succession of two sets of pipes 48 is provided in two planes perpendicular to the projection of the solar radiation (heat and light) emitted by the curved laminar mirror bodies 2, and at the same time, at the confluence of those two planes, a straight profile 49 projects below and downwards in order to absorb the residual radiation underneath. The pipes 48 of each set are joined together forming the characteristic plane perpendicular to the emitted radiation.

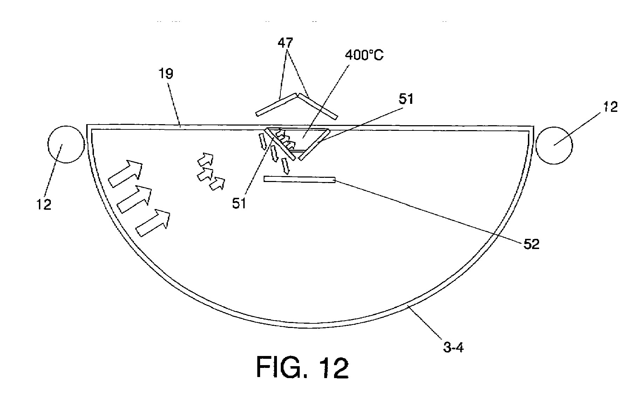

In a second embodiment shown in figure 12, a single pipe has been provided of trapezoid section 50 in an inverted position, whose inclined faces perpendicularly receive radiation from the sun. Provided in those inclined faces are a diffracting lamina or filter 51 which reflects the light towards a lower photovoltaic cell 52, while the other component of the radiation, which is heat, is transmitted to the fluid which circulates in or is contained in the trapezoid pipe 50. The section of the pipe could be any other, though it will preferably have at least the two inclined faces described for perpendicularly receiving solar radiation.

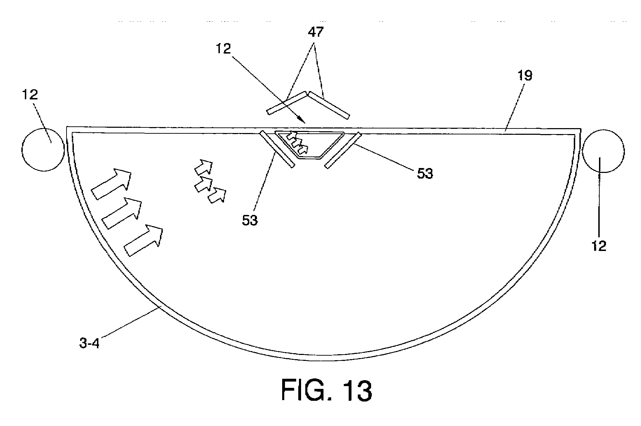

In a third embodiment shown in figure 13, similar to the above, the diffractor is done away with, and some transparent photovoltaic cells 53 are located close to and parallel with the inclined lateral faces of the trapezoid pipe 50, which cells 53 directly collect the light radiation and, on the other hand, allow the heat radiation to pass to the fluid in the pipe 50.

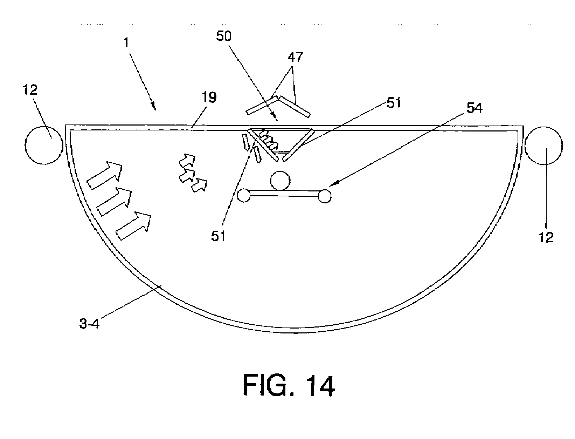

A fourth embodiment shown in figure 14 includes in principle the same embodiment as the second one, with the difference that it has a photolysis cell 54 instead of the photovoltaic cell of the second embodiment. This photolysis cell 54 is intended to obtain hydrogen and oxygen separately, as is known.

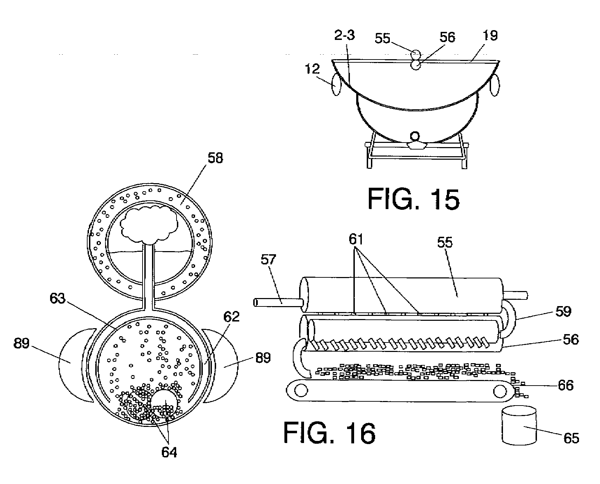

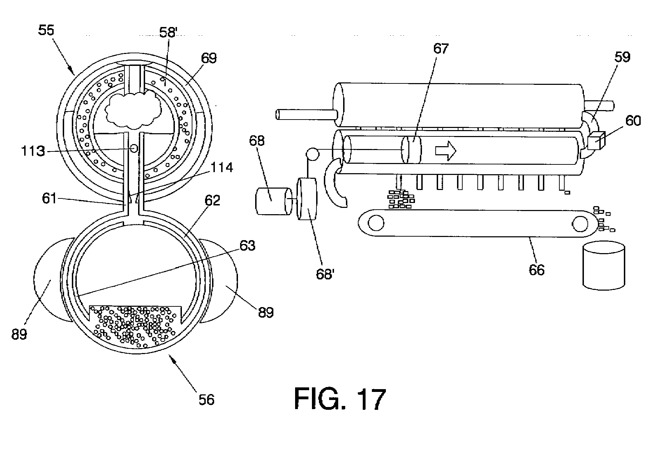

In a fifth embodiment shown in figures 15, 16 and 17, the structure located in the strategic zone of the modules 1 is intended for desalination and/or purification of the water, and the possibility also exists of obtaining other forms of energy by means of exploiting the vacuum produced during the desalination and/or purification process.

The structure of this fifth embodiment is defined on the basis of two cylindrical collectors, an upper one 55 and a lower one 56, the latter receiving solar radiation. Circulating through this lower collector is in principle the cooling salt water previously introduced via an inlet pipe 57 which leads to an annular space 58 of the upper collector 55 then passing to the lower collector 56 via a curved tubular portion 59 where a passage and cut-off electrovalve 60 has been inserted.

Starting from the lower collector 56 is a linear succession of narrow radial ducts 61 which lead to the longitudinal centre of the upper collector 55. In the lower collector 56, there exists in turn a narrow annular space 62 demarcated between the wall of the actual collector 56 and a tubular body 63 open at the bottom, in such a way that the small portion of fluid that is found in that narrow annular space 56 at each moment receives the entire intensity of the heat radiation, with which the evaporation will have a high efficiency and the condensation of that vapour in the mouths of the narrow ducts 61 will also have high efficiency, to which a positive contribution is made by the salt water or unpurified water previously circulating through the narrow closed annular space 58 of the upper collector 55. The resulting water accumulates in the centre of the upper collector 55, while the residues (precipitated salt and other impurities) are extracted to the outside by means of a dragging and cleaning mechanism 64 located in the lowest part of the lower collector 56, these residues being collected in a tank 65 via a conveyor belt 66.

Another possibility is that the annular space 62 of the lower collector 56 is divided into various compartments separated by small partitions 62', thereby achieving evaporation at different pressures, with the vapour rising through the respective radial ducts 61, 61'.

Moreover, when the lower collector 56 is emptied, a vacuum is produced inside which can be exploited in combination with atmospheric pressure to drive a piston 67 associated with a current generator 68 or other device for generating electricity, with the interposition of an inertial flywheel 68' or similar. The duct 61 incorporates a conical narrowing 114 which is complemented with a small spherical body 113 which blocks the duct 61 during the emptying of the lower collector 56.

Another possibility is that the upper collector 55 can incorporate several concentric annular chambers, with cooling salt water circulating via one of them 58' while liquid from the salt-free water will be obtained in the others 69 at different pressures in each chamber.

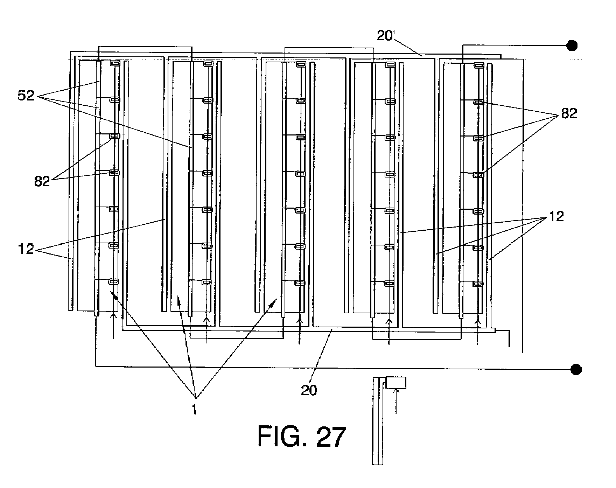

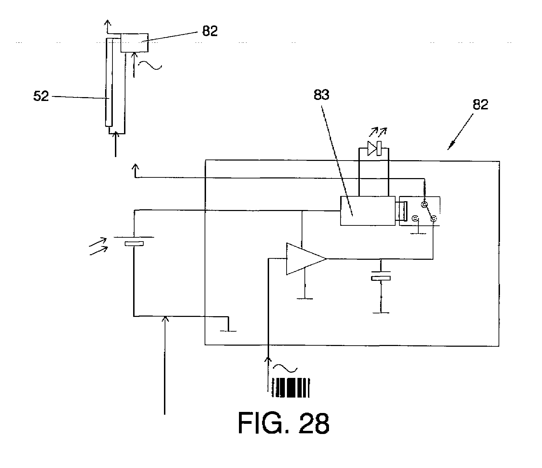

When the energy receivers are photovoltaic cells 52 (figures 27 and 28) these are preferably connected in series, and at the same time they are associated with small electronic circuits 82 in order to directly achieve a high voltage in alternating current, thereby avoiding large conventional transformers.

So, the cells are connected in series and incorporate certain electronic circuits, which are fed by a master signal consisting of a sinusoidal alternating current equal in frequency and form to the type of current for electrical consumption in each country, 60 or 50 Hz, in order to obtain a single phase or multiphase current signal with the array of cells.

Each electronic circuit 82 presents a known design clearly shown in figure 28, notable here being the incorporation of a protection block 83 for cutting off the voltage.

The steel guide cables 5" are also utilised as conductor cables for the electricity when the modules 1 include photoelectric cells. So, these cells are connected to the arched supports for stiffening 3 and these, being in contact with the cables 5", transmit the electric current,

The mounting process, after have prepared the site, has an initial phase in which a first inflatable rolled tape 70 is laid out with laser devices 71 located at regular distances and a second similar tape 70 is laid in the other perpendicular direction as if they were the two coordinates axes. These rolls of tape 70 are transported on vehicles which traverse the site.

Next, the laser devices 71 are activated, with which a grid of laser beams 72 is formed in order to precisely determine the crossing points where the arms 73 of some inverted "U" shaped frames or supports 27 have to be provided in order to install the solar modules 1. The pertinent holes 75 are made where those arms of the frames 27 are going to be located. After ensuring their correct positioning, the arms 73 of the frames 27 incorporate inflatable elements 76 in the manner of inclined legs in order to keep the supports 27 in the correct position during the setting of the concrete 77 poured In correspondence with the holes 75 where the arms 73 of the frames 27 are located.

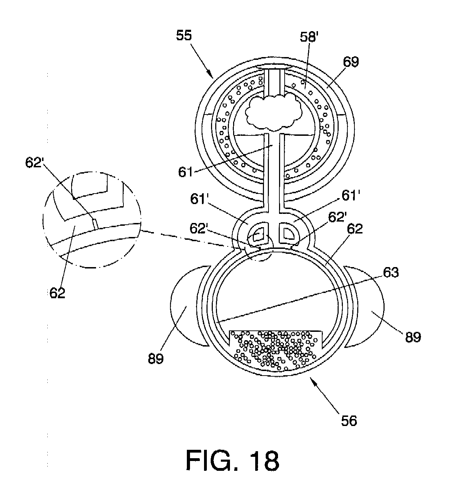

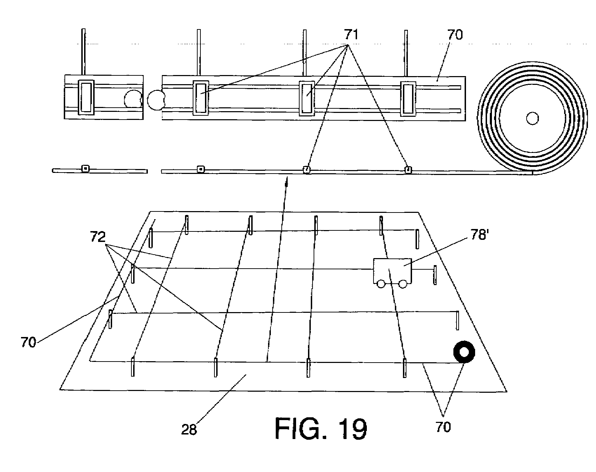

The laying of the rollable tapes along with the production of the holes, the pouring of the concrete and the positioning of the frame 27 are done by means of a robot vehicle 78' as shown in figures 18 and 19. This robot vehicle is remotely guided with the aid of GPS.

The inflatable elements 76 start from some annular pieces 88, also inflatable, with separately grasp each arm 73 of the frames 27.

In a later phase, the different solar modules 1 proceed to be installed on the aligned supports or frames 27.

To achieve this, a robot 78 has been provided supported by two lateral motorised vehicles 79, in such a way that, considering an alignment of frames 27, the vehicles 79 will pull the central robot 78 which possesses a large lower clearance 80 in order to span each alignment of frame 27 as the pair of vehicles 79 advances.

These two vehicles 79 transport the flexible mirror plaques 2 that will then be mounted on the arched structure 3 of the concentrators 1.

On the other hand, the robot 78 transports all the other components, this robot 78 being responsible for mounting the array of all the elements of the structure of the different modules 1 automatically.

Provision has been made for the possibility of incorporating a Fresnel lens 81 in order to project the solar radiation on the respective energy receiver. This lens is provided in an upper plane of each solar module 1.

The inflatable tapes 70 incorporate a succession of floater devices 84 which include the actual floaters themselves 88 with a fluid contained in flexible receptacles 86 linked to each other by means of a common duct 85 in order to thereby be able to level the different floater devices 84 and therefore the flexible tapes 70. In this way, a horizontal plane is assured in the grid of laser beams 72, particularly when the ground 28 is uneven. Provision has also been made for some support feet 87 for levelling the unrolled tape 70 when the irregularities in the terrain are more pronounced.

The mounting robot 78, after having been self-located in its precise position with the aid of sensors, shapes the arch structure of the respective module positioning it on two consecutive frames in their exact position by means of sensors.

In another later phase, the robot 78 will position the energy receiver, the synchronism block and the anti-wind system.

In another phase, several reflecting laminar bodies will be positioned on the arched stiffening supports of the respective module where they are automatically screwed in place.

In another following phase the positioning of the balancing pipes 12 is carried out.

Moreover, when the modules are positioned on the closed loop cables 5", the travel of the robot pulled by the pair of vehicles will run between pairs of alignments of those closed loop cables 5".

The reflecting laminar bodies 2 can be integral with a structure in the form of a beehive, via which the curved supports 3 of the different modules 1 are attached.

In order to obtain electrical energy provision has also been made so that each module can incorporate at least some collimator devices 100, 101, which collect the projection of the light radiation reflected by the reflecting mirror surface of the curved laminar body 2; furthermore incorporating some receiver diffractor devices 102 for the light radiation concentrated in the collimator devices 100, 101 and some cells 103 optimised to different light spectra which receive the light radiation according to the frequency of colours emitted by the diffractor devices 102.

The collimators 100 can be located by inserting them in some windows of the arched laminar body of the mirror, interrupting the continuity of said laminar body 2, while the diffractors 102 and the cells 103 optimised to different light spectra are located behind that laminar body 2.

Each collimator 100, diffractor 102 and cell 103 optimised to different light spectra comprise an independent whole which is fixed to the laminar body 2 or module 1 by means of the collimator 100 in correspondence with the respective window by means of flanges or similar, not represented in the figures.

The collimators 101 can also be fixed via the top to an elongated support 104 reaching to the ends of each module 1.

The collimators can present an arched structure 101, the concave mirror face of which projects the light radiation to the diffractors 102 and these to the cells 103 optimised to different light spectra, provision having been made for the possibility that the collimators can also present a plane structure 100 which will project the light radiation to the diffractors 102.

The light reflecting face of the diffractors 102 consists of a smooth mirror surface with small grooves which project the reflection of the light in the entire range of colours towards the cells 103 optimised to different light spectra. This smooth mirror surface with small grooves is similar to that shown by a compact disc or other support having a similar surface or with any other shape of perimeter.

In another simpler embodiment, though no less effective, provision has been made for the modules 1 to incorporate at least one receiver photoelectric cell 52 for the light radiation situated, for example, centrally above the respective module 1. It is possible to incorporate some mirror elements 105, 106 and 107 respectively located above and below the photoelectric cells 52 for the exploitation and feedback of the solar rays which might become lost, essentially on both sides of said photocells 52. It can also be pointed out that the upper mirror 106 is located in a vertical plane in order to prevent shadows, with one of its faces including a multitude of small mirrors 108.

As mentioned earlier, another way of exploiting the energy of the solar concentrator is to incorporate pipes, coils or similar, through which water or other fluid is made to flow in order to raise its temperature with the heat generated by the light radiation emitted by each curved laminar body 2.

When the collimators 100, 101, diffractors 102 and cells optimised to different light spectra 52 are Incorporated, the process of mounting the solar energy concentrator consists of a first stage in which at least one plane laminar body is curved in a vehicle 109 in order to obtain a curved structure, the concave face of which presents a reflecting mirror surface.

A second stage in which some stiffening supports 3 are mounted on each curved laminar body 2 in order to secure its curved structure.

A third stage in which independent units are mounted on the curved laminar structure for reception of light.

A stage is included in which two longitudinal tanks 12 are fitted in the sides of the curved laminar bodies 2, the tanks containing a material which can be transferred from one tank to the other in order to vary the orientation according to the position of the sun with the aid of a light sensor.

Also included is a stage in which the curved structure that has been shaped is offloaded onto the ground via the rear part of the vehicle 109.

In another intermediate stage some parallel guides 5. 5'. 5" are deposited on the ground which will be complemented with other guides 4 of the curved laminar body.

In another stage the curved laminar bodies together with the rest of their elements linked to them are secured by means of some pulleys 110 and stays 111, the ends of which are attached to the two opposites sides of the modules 1 being formed.

Moreover, it can be pointed out that the vehicle 109 carries a continuous sheet in the form of a roll 112 from which are obtained the different laminar bodies of curved structure forming the components of each module 1.

Each light receiver can comprise a photoelectric cell 52 or independent arrays formed from a collimator 100, 101, diffractor 102 and cells optimised to different light spectra 103.

The light receivers could also consist of pipes or coils through which water or other fluid would flow in order to be heated with the solar radiation emitted by the curved laminar body 2.

The concentrator of the Invention will normally be able to rest on the ground itself, though its application can evidently be carried out on any other surface without it necessarily having to be horizontal, nor having to be actual ground, and it can be a raised surface, for example.

When the mounting of the modules 1 is carried out by means of cables 5", first these modules 1 are associated via the ringed runners 90 engaging the slackened cables 5" in the end supports 10 in order to finally proceed to tense the cables 5" and thus raise the array of modules 1 with respect to the ground 28, thereby also achieving the definitive support for the modules 1 on the tensed cables 5".

## Claims

1. **SOLAR ENERGY CONCENTRATOR,** which, including at least one module with a curved-concave reflective mirror surface that concentrates the solar radiation towards certain devices in order to then obtain different types of energy, and furthermore including means for orienting that mirror surface according to the position of the sun, is **characterised in that** each module (1) comprises a thin lightweight laminar arched structure body (2) incorporating the curved-concave mirror surface, said laminar body (2) being associated with certain stiffening supports (3) which stabilise and stiffen said arched structure in order to maintain its shape, said arched structure being supported on a ground (28) with interposition of guiding means by which the arched structure at least tilts towards one side or the other depending on a light sensor or timer which activates a device that positions each module in real time with the required orientation according to the position of the sun.

2. **SOLAR ENERGY CONCENTRATOR,** according to claim 1, **characterised in that** the device for positioning each module or array of modules (1) in real time comprises two side tanks (12) which, depending on the relative variation among the weights of the material contained in said tanks (12), vary the orientation of the respective module (1), passing the material from one tank to the other tank (12) mechanically and/or electrically in order to balance and achieve each position of the module (1) depending on a light sensor or timer, transferring material from one tank to another tank (12) and vice versa, in accordance with the position of the sun.

3. **SOLAR ENERGY CONCENTRATOR,** according to claim 2, **characterised in that** the side tanks (12) hang in a tilting manner in the uppermost part of the sides of each module (1) along the length thereof.

4. **SOLAR ENERGY CONCENTRATOR,** according to any one of claims 2 or 3, **characterised in that** the material contained in the tanks (12) is a liquid fluid that is transferred by means of a closed circuit from one tank to the other (12) via lower zones aided by a pump associated with the light sensor or timer.

5. **SOLAR ENERGY CONCENTRATOR,** according to any one of claims 2 to 4, **characterised in that** the tanks (12) are hollow closed bodies with an essentially tubular structure provided with small upper perforations.

6. **SOLAR ENERGY CONCENTRATOR**, according to claim 1, **characterised in that** the device for positioning each module or array of modules (1) in real time comprises at least a linear motor element, such as an hydraulic or pneumatic cylinder (93) which acts on each module or array of modules (1) in order to cause them to tilt towards one side of the other, the rod of the respective cylinder (93) being connected in correspondence with the upper edges of the respective module or array of modules (1).

7. **SOLAR ENERGY CONCENTRATOR**, according to claim 1, **characterised in that** the device for positioning each module or array of modules (1) in real time comprises at least a rotary motor element (94), whose outlet rotation shaft connects with a pulley (95) to which a belt (97) is coupled or similar coupled in another loose rotary element (96), belts (97) whose ends connect with the upper edges of each module or array of modules (1).

8. **SOLAR ENERGY CONCENTRATOR,** according to any one of the above claims, **characterised in that** the guiding means are located in the lower part of each module (1) incorporating some guides which are complemented with other transverse ground guides (28) in order to ensure an ordered tilting of the modules during their tilting movement, searching for the most suitable orientation according to the position of the sun.

9. **SOLAR ENERGY CONCENTRATOR**, according to claim 8, **characterised in that** the guides (4) for the modules are incorporated into the stiffening supports (3).

10. **SOLAR ENERGY CONCENTRATOR,** according to any one of claims 8 or 9, **characterised in that** the ground guides (5) comprise ribs acting as rails while the guides (4) for the module comprise a staggered structure.

11. **SOLAR ENERGY CONCENTRATOR,** according to any one of claims 8 or 9, **characterised in that** the ground guides comprise ribs acting as rails (5) while the guides (4) for the module comprise a channelled structure.

12. **SOLAR ENERGY CONCENTRATOR**, according to any one of claims 8 or 9, **characterised in that** the ground guides (5) comprise channels while the guides (4) for the respective module comprise ribs.

13. **SOLAR ENERGY CONCENTRATOR,** according to any one of claims 8 or 9, **characterised in that** the ground guides (28) comprise transverse tensed cables (5") connected via their ends to supports (10) fixed to the ground, cables on which respective guide profiles for the modules (1) following the curvature of the stiffening supports (3) rest.

14. **SOLAR ENERGY CONCENTRATOR,** according to claim 13, **characterised in that** the guides for the modules via the tensed cables (5") and the guide profiles for the modules incorporate ringed runners (90) clasping the cables (5") and also widened portions (91) of the guide profiles for the modules (1), dragging the movement of the modules to the ringed runners (90) all along the tensed cables (5").

15. **SOLAR ENERGY CONCENTRATOR,** according to any one of claims 13 or 14, **characterised in that** it incorporates tensioning elements (92) connected to the end supports (10) and cables (5") for tautening thereof.

16. **SOLAR ENERGY CONCENTRATOR,** according to any one of claims 8 or 9, **characterised in that** the ground guides comprise toothed racks (5') which are complemented with teeth of the guides (4) of the modules.

17. **SOLAR ENERGY CONCENTRATOR,** according to any one of the above claims, **characterised in that** the stiffening supports (3) comprise an enveloping structure clasping each module (1), at least via its ends, and at the same time having a transverse section (19) which runs along the distance existing between the two longitudinal free edges of the curved laminar bodies (2).

18. **SOLAR ENERGY CONCENTRATOR,** according to any one of claims 2 to 17, **characterised in that** when there exist at least two alignments of modules (1) in parallel, provision has been made for the tanks (12) on one side of the modules (1) to be Interconnected by means of a general duct (20) arranged in the forward face, while the tanks (12) on the other even side are interconnected by means of another general duct (20') arranged in the rear face; all this in order to achieve a perfect synchronisation in at least the tilting movement to one side and the other of the modules in order to orientate them according to the position of the sun.

19. **SOLAR ENERGY CONCENTRATOR,** according to any one of the above claims, **characterised in that** it includes means of securing and stability of the modules (1) which permit at least the tilting movement thereof, said means consisting of pulleys (98) secured to the ground (28) in which a stay (99) is coupled, the two arms of which are connected via their ends in the opposite sides of the stiffening supports (3).

20. **SOLAR ENERGY CONCENTRATOR,** according to any one of claims 8 or 9, **characterised in that** the curved module (1) are guided and rest on the upper arm of closed loop cables (5"), the two arms of which, upper and lower, are attached by means of stiff pieces (11) which maintain the horizontal direction of said upper arms.

21. **SOLAR ENERGY CONCENTRATOR,** according to any one of claims 18 or 19, **characterised in that** when there exists at least two alignments of modules (1) in parallel, with their tanks (12) interconnected by means of a pair of general pipes, forward (20) and rear (20'), each one of them is linked to the ends of rocker arms (21) centrally linking to vertical posts (22), the free ends of said rocker arms (21) being associated by means of a tensor cable (23).

22. **SOLAR ENERGY CONCENTRATOR,** according to claim 1, **characterised in that** the guide for the modules (1) incorporates a securing trolley (6) with lower wheels (8) and upper wheels (7), the latter being in contact with the stiffening supports (3), while the lower wheels (8) are in contact with the support or frame of the corresponding guide.

23. **SOLAR ENERGY CONCENTRATOR**, according to claim 22, **characterised in that** the securing trolley (6) includes side buffers (9) close to the curvature of the stiffening supports (3) which prevent deformation of the modules (1) when the wind blows strongly.

24. **SOLAR ENERGY CONCENTRATOR,** according to claim 1, **characterised in that** the modules (1) are coupled to the guiding supports by means of pairs of pinions (24 and 25) coupled in fixed points: some pinions (24) which make contact with an upper band of the curved supports (3) of the modules (1) and other pinions (25) which make contact with a lower band of said same curved supports (3).

25. **SOLAR ENERGY CONCENTRATOR,** according to any one of the above claims, **characterised in that** it incorporates lateral reinforcements (34) joined by means of a stay or the like in order to prevent deformations, including a third centred reinforcement (35) fixed to an elongated support (20).

26. **SOLAR ENERGY CONCENTRATOR,** according to any one of the above claims, **characterised in that** it incorporates automatic cleaning means consisting of a self-propelled vehicle (37) provided with a pair of lateral brushes (38) and cleaning pipes (39), the vehicle (37) longitudinally travelling along the modules (1) via their lowermost part, the vehicle further including a cleaning fluids tank (40), a control circuit (41) and sensors (42), along with a recharging plug (45).

27. **SOLAR ENERGY CONCENTRATOR,** according to any one of the above claims, **characterised in that** each module incorporates at least:
- collimator devices (100, 101) which collect the projection of the light radiation reflected by the reflecting mirror surface of the curved laminar body (2);
- diffractor devices (102) that receive the light radiation concentrated in the collimator devices (100, 101);
cells (103) optimised to different light spectra which receive the light radiation according to the frequency of colours emitted by the diffractor devices (102).

28. **SOLAR ENERGY CONCENTRATOR,** according to claim 27, **characterised in that** the collimators (17) are inserted in passing windows of the arched laminar mirror body (2), interrupting the continuity of said laminar body (2), while the diffractors (102) and the cells (103) optimised to different light spectra are located behind said laminar body (2).

29. **SOLAR ENERGY CONCENTRATOR,** according to claim 28, **characterised in that** each collimator (100), diffractor (102) and cell (103) optimised to a different light spectra comprises an independent group which is fixed to the laminar body (2) by means of the collimator (100) in correspondence with the respective passing window by means of flanges or similar.

30. **SOLAR ENERGY CONCENTRATOR,** according to claim 27, **characterised in that** the collimators are upper fixed in the elongated support (104) which reaches the ends of each module (1).

31. **SOLAR ENERGY CONCENTRATOR,** according to claim 30, **characterised in that** the collimators present an arched structure (101), the curved-concave mirror face of which projects the light radiation to the diffractors (102) and these to the cells (103) optimised to different light spectra.

32. **SOLAR ENERGY CONCENTRATOR,** according to any one of claims 27 to 30, **characterised in that** the collimators present a plane structure (100), which projects the light radiation to the diffractors (102).

33. **SOLAR ENERGY CONCENTRATOR,** according to any one of claims claim 27 to 32, **characterised in that** the light reflecting face of the diffractors (102) comprises a smooth mirror surface with small crevices which project the reflection of the light in the entire range of colours towards the cells (103) optimised to different light spectra.

34. **SOLAR ENERGY CONCENTRATOR,** according to any one of claims 1 to 18, **characterised in that** each module (1) incorporates at least one photoelectric cell (52) receiver of the light radiation situated centrally above the respective module (1).

35. **SOLAR ENERGY CONCENTRATOR**, according to the above claim, **characterised in that** it includes mirrors (105, 106 and 107) above and below the photoelectric cells (52), means of exploitation and feedback of the solar rays which might become lost.

36. **SOLAR ENERGY CONCENTRATOR,** according to claim 35, **characterised in that** the upper mirror (106) is located in a vertical plane, and with one of its faces including a multitude of tiny mirrors (108).

37. **SOLAR ENERGY CONCENTRATOR,** according to any one of claims 1 to 19, **characterised in that** each module (1) includes at least a pipe, coil or similar, through which water or another fluid flows in order to heat it with the heat generated by the light radiation emitted by the curved laminar body (2).

38. **SOLAR ENERGY CONCENTRATOR**, according to any one of claims 1 to 19, **characterised in that** in a centred and raised strategic zone of the modules (1) two sets of pipes (48) are longitudinally provided in two planes perpendicular to the projection of the radiation emitted by the curved laminar mirror bodies (2), and at the same time from the confluence of those two planes of pipes (48) converging underneath, a straight profile (49) projects downwards in order to absorb the lower residual radiation, furthermore including an upper reflecting pitched roof (47) in order to maintain the heat and optimise the incoming radiation.

39. **SOLAR ENERGY CONCENTRATOR,** according to any one of claims 1 to 19, **characterised in that** in a centred and raised strategic zone of the modules (1) a single longitudinal pipe (50) is provided with two inclined faces converging downwards which perpendicularly receive the projection of the solar radiation via the laminar mirror bodies (2), said inclined faces including diffracting laminas or filters (51) which reflect the light towards a photovoltaic cell (52), while the other component of the radiation, being heat, is transmitted to the fluid which circulates in pipe (50), furthermore including a reflecting pitched roof (47) in order to maintain the heat and optimise the incoming radiation.

40. **SOLAR ENERGY CONCENTRATOR,** according to any one of claims 1 to 19, **characterised in that** in a centred and raised strategic zone of the modules (1) a longitudinal pipe (50) is provided with two inclined faces converging downwards and in the proximity of which transparent photovoltaic cells (53) are provided in planes parallel to said inclined faces, said transparent photovoltaic cells (53) directly collecting the light radiation and, on the other hand, allowing the heat radiation to pass up to the fluid of the longitudinal pipe (50) in order to heat it, furthermore including a reflecting pitched roof (47) in order to maintain the heat and optimise the incoming radiation.

41. **SOLAR ENERGY CONCENTRATOR**, according to any one of claims 1 to 19, **characterised in that** in a centred and raised strategic zone of the modules (1) a single longitudinal pipe (50) Is provided with two inclined faces converging downwards which perpendicularly receive the projection of the solar radiation via two laminar mirror bodies (2), said inclined faces including diffracting laminas or filters (51) which reflect the light towards a photolysis cell (54), furthermore including a reflecting pitched roof (47) in order to maintain the heat and optimise the incoming radiation.

42. **SOLAR ENERGY CONCENTRATOR**, according to any one of claims 1 to 19, **characterised in that** in a centred and raised strategic zone of the modules (1) two longitudinal collectors, upper (55) and lower (56), are provided for treating salt water or contaminated water, obtaining residual water or purified water by evaporation, the water to be treated being made to circulate at least through the lower collector (56) which will receive solar radiation via the laminar mirror bodies (2) of the modules (1), raising the temperature of the water until evaporation of the water is achieved which will pass in the gaseous state as far as the upper collector (55) via narrow radial ducts (61) linking both collectors (55) and (56), the water vapour being then condensed into the liquid state inside the upper collector (55), and the precipitated salt and/or other residues being extracted by means of an extraction and cleaning mechanism (64) located in the lower collector (56).

43. **SOLAR ENERGY CONCENTRATOR,** according to claim 42, **characterised in that** the lower collector (56) incorporates a narrow annular space (62) defined between the outer wall of the lower collector (56) and a tubular body (63) arranged concentrically and open at the bottom, rapidly heating the part of the fluid that circulates though that narrow annular space (62), further achieving a faster evaporation and, at the same time, from said narrow annular space (62) start said narrow radial ducts (61).

44. **SOLAR ENERGY CONCENTRATOR,** according to claim 42, **characterised in that** the annular space (62) of the lower collector (56) is divided into various compartments separated by small partitions (62'), thereby achieving evaporation of the fluid at different pressures, with the vapour rising through respective radial ducts (61, 61').

45. **SOLAR ENERGY CONCENTRATOR,** according to any one of claims 42 to 44, **characterised in that** the upper collector (55) incorporates at least one concentric annular chamber (58), through which circulates the water to be treated before it reaches the lower collector (56), the passage of this untreated water by the said annular chamber (58) helping to produce the condensation of the water vapour more rapidly, said chamber (58) being defined by the outer wall of the collector and an inner concentric tubular body which limits a central space where the narrow ducts (61) in which the steam circulates flow.

46. **SOLAR ENERGY CONCENTRATOR,** according to claim 45, **characterised in that** the upper collector (55) incorporates several concentric annular chambers (69): one of greater condensation (69) externally defined by the wall of the collector, and an inner (58'), via which circulates the untreated water prior to passing to the lower collector (56), said inner annular chamber (58') defining a centred space where the narrow ducts (61) also flow, for the condensation of the water at a different pressure from the lower chamber (58').

47. **SOLAR ENERGY CONCENTRATOR,** according to any one of claims 45 or 46, **characterised in that** the lower collector (56) incorporates a piston (67) in such a way that when said lower collector (56) is emptied of the fluid contained during the evaporation process a vacuum is produced inside the lower collector (56) which will displace the piston (67) previously retained during the evaporation process, with its fastening being released when the collector (56) is emptied, said piston (67) being associated with an electrical generator (68) or other energy generating receiver for producing the same, and at the same time the ducts (61) incorporate a conical narrowing (114) which is complemented with a small spherical body (113) which blocks each duct (61) of the lower collector (56) when vacuum is produced in said collector (56).

48. **SOLAR ENERGY CONCENTRATOR,** according to any one of claims 45 to 47, **characterised in that** the water to be treated passes from the upper collector (55) to the lower one (56) via a curved duct (59) where a passage and cut-off valve (60) Is Inserted which closes when the lower collector (56) is full with fluid.

49. **SOLAR ENERGY CONCENTRATOR**, according to any one of the above claims, **characterised in that** the modules (1) incorporate a Fresnel lens (81) arranged on top.

50. **SOLAR ENERGY CONCENTRATOR,** according to any one of the above claims, **characterised in that** the receiver devices of the solar radiation are photovoltaic cells (52) connected in series and associated with small electronic circuits (82) in order to obtain an alternating current with a high voltage in the array of cells, each electronic circuit (52) including among its elements a protection block for maximum and planned voltage or unexpected voltage cuts.

51. **SOLAR ENERGY CONCENTRATOR,** according to claim 50, **characterised in that** the electronic circuits (82) are connected together in order to receive a common master signal to those circuits (82).

52. **SOLAR ENERGY CONCENTRATOR,** according to claim 35, **characterised in that** the master signal is a sinusoidal alternating current equal in frequency and form to the type of current for electrical consumption in each country, 60 or 50 Hz, in order to obtain with the array of cells an alternating current signal equal to the master signal but of greater voltage or high voltage.

53. **SOLAR ENERGY CONCENTRATOR,** according to claim 51, **characterised in that** the master signal consist of modulated pulses and the circuits convert this signal of modulated pulses into a sine wave.

54. **SOLAR ENERGY CONCENTRATOR,** according to claim 51, **characterised in that** the master signal is single phase or multiphase.

55. **SOLAR ENERGY CONCENTRATOR,** according to any one of the above claims, **characterised in that** the reflecting laminar bodies (2) are integral with a structure in the form of a beehive, via which they are attached to the curved supports (3).

56. **SOLAR ENERGY CONCENTRATOR,** according to any one of the above claims, **characterised in that** the laminar mirror bodies (2) incorporate at least in their highest lateral zones of the modules (1) air passages which are open, at least when the wind is blowing harder than a certain speed.

57. **SOLAR ENERGY CONCENTRATOR,** according to claim 56, **characterised in that** the air passages of the laminar bodies (2) comprise passing holes (31).

58. **SOLAR ENERGY CONCENTRATOR,** according to claim 56, **characterised in that** the air passages comprise openings (29) made as a consequence of cuts which demarcate folding flaps (29') which are joined to magnetic elements (32) when there does not exist any wind, releasing the air passages (29) when the wind is blowing harder than a certain speed.

59. **SOLAR ENERGY CONCENTRATOR,** according to claim 56, **characterised in that** the air passages (30) present a radial structure associated with pieces (33) with their front face covered by a mirror material,

60. **SOLAR ENERGY CONCENTRATOR,** according to claim 1, **characterised in that** the guiding means for the modules permit the arched structure to tilt and be moved by rolling towards one side or the other depending on the light sensor or timer which activates the device that positions each module in real time with the required orientation and according to the position of the sun.

61. **SOLAR ENERGY CONCENTRATOR,** according to any one of claims 13, 14, 15 or 20, **characterised in that** the guiding cables (5") are utilised as conducting elements for electricity when the modules (1) include photoelectric cells, in such a way that said cells are connected to the arched stiffening supports (3) and these, being in contact with the cables (5"), transmit electric current.

62. **MOUNTING PROCESS OF A SOLAR ENERGY CONCENTRATOR**, which, being the process intended for mounting on the ground an array of solar modules associated with each other and that automatically move, at all times, searching for the sun orientation, is **characterised in that** it comprises:
- A first stage in which on the ground (28) two rollable tapes (70) are laid out perpendicularly in the manner of two coordinate axes by means of a first robot vehicle (78'), the tapes being provided with laser devices (71) at regular distance intervals which project a grid of laser beams (72) in a single horizontal plane;
- a second stage in which means for guiding, supporting and installation of the solar modules (1) are provided in accordance with the grid formed by the laser beams (72), also by means of said first robot vehicle (78');
- a third stage in which a support structure (3) for the different modules (1) is mounted;
- a fourth stage in which energy receivers are mounted:
- a fifth stage in which the reflecting laminar bodies (2) are mounted by automatically screwing them on the support structure (3) of the solar modules (1),
- a sixth stage in which the balancing pipes (12) are positioned:
- a seventh stage in which the water and energy circuits are closed.

63. **MOUNTING PROCESS OF A SOLAR ENERGY CONCENTRATOR**, according to above claim, **characterised in that** the guiding, supporting and installation means for the modules (1) consist of inverted "U" shape supports (27), which are positioned by means of the first robot vehicle (78').

64. **MOUNTING PROCESS OF A SOLAR ENERGY CONCENTRATOR**, according to claim 62, **characterised in that** the guiding, supporting and installation means for the modules (1) consist of closed loop cables (5") coupled to end supports (10), with several modules (1) being coupled on the upper arms of adjacent closed loop cables (5").

65. **MOUNTING PROCESS OF A SOLAR ENERGY CONCENTRATOR**, according to claim 63, **characterised in that** the arms (73) of the supports in the form of an inverted "U" are secured in holes (75) previously made and with the aid of concrete (77), these arms (73) including inflatable elements (76) acting as inclined legs in order to assure the correct positioning during the setting of the concrete (77), with each of those inflatable elements (76) starting from an inflatable annular piece (88) which clasps each arm (73) of the supports (27), the holes (75) being made with the aid of the first robot vehicle (78'), which also carries out the pouring of the concrete (77) at the same time as also positioning the inflatable elements (76).

66. **MOUNTING PROCESS OF A SOLAR ENERGY CONCENTRATOR**, according to claim 62, **characterised in that** in an intermediate stage between the third and fourth stage, at least one lateral vehicle (79) with laminar mirror bodies (2) pulls a centred robot (78) transporting the components of the solar modules, with exception of the laminar mirror bodies (2).

67. **MOUNTING PROCESS OF A SOLAR ENERGY CONCENTRATOR**, according to claim 62, **characterised in that** it includes a vehicle (109) in which at least one plane laminar body is curved in order to obtain a curved structure, whose curved-concave face presents a mirror surface.

68. **MOUNTING PROCESS OF A SOLAR ENERGY CONCENTRATOR**, according to claim 67, **characterised in that** it includes a stage in which each shaped curved structure is offloaded on the ground via the rear part of the vehicle (109).

69. **MOUNTING PROCESS OF A SOLAR ENERGY CONCENTRATOR**, according to any one of claims 62 or 67, **characterised in that** it includes a stage in which parallel guides are provided on the ground (28) which are complemented with other guides of the curved laminar body.

70. **MOUNTING PROCESS OF A SOLAR ENERGY CONCENTRATOR**, according to claim 62, **characterised in that** the ground guides (28) include cables (5") which are in principle connected in a slackened state to end supports (10) fixed to the ground, in such a way that by positioning the guides (4) of the modules (1) on the slackened cables (5"), the latter are then tensed and all the modules are raised up with respect to the ground (28), furthermore mounting ringed runners (90) which are associated with and secure the guides (4) of the modules (1) with the cables (5") thus avoiding the separation of the modules (1) with respect to the cables (5") when conditions are windy or owing to other external forces tending to create such separation.

71. **MOUNTING PROCESS OF A SOLAR ENERGY CONCENTRATOR**, according to any one of claims 62 to 70, **characterised in that** it includes a stage in which when there exists at least two modules in parallel, the tanks on one side of the modules are interconnected via a general duct (20) provided in the forward face, while the tanks (12) on the other paired side are interconnected via another general duct (20') provided in the rear face.

72. **MOUNTING PROCESS OF A SOLAR ENERGY CONCENTRATOR**, according to any one of claims 62 to 70, **characterised in that** it includes a stage in which the curved bodies (2) together with the rest of their elements linked to them are secured by means of pulleys (98) and stays (99), the ends of which are secured to the two opposing sides of the curved laminar bodies (2).

73. **MOUNTING PROCESS OF A SOLAR ENERGY CONCENTRATOR,** according to claim 67, **characterised in that** the vehicle (109) carries a continuous sheet in the form of a roll (112), starting from which the laminar bodies of curved structure (2) are obtained.
